# EUROPÄISCHE PATENTSCHRIFT

(11) **EP 2 251 184 B1**
(45) Veröffentlichungstag und Bekanntmachung des Hinweises auf die Patenterteilung: **13.01.2016**
(21) Anmeldenummer: 10004669.7
(22) Anmeldetag: 04.05.2010
(51) Int. Cl.: B29C 65/78, B65D 1/22, B65D 25/24

(54) **Verfahren zur Herstellung eines Transport- und Lagermittels sowie ein zur Durchführung des Verfahrens ausgebildetes Transport- und Lagermittel**
Method for producing a transport and storage device and a transport and storage container designed to carry out the method
Procédé de fabrication d'un moyen de transport et de stockage analogue, ainsi que moyen de transport et de stockage approprié à l'exécution du procédé

(30) Priorität: 15.05.2009 DE 102009021415
(43) Veröffentlichungstag der Anmeldung: 17.11.2010
(73) Patentinhaber: Fritz Schäfer GmbH, 57290 Neunkirchen (DE)
(72) Erfinder: Hirz, Diethelm, 57290 Neunkirchen (DE); Jung, Matthias, 57223 Kreuztal (DE); Nieder, Andreas, 57290 Neunkirchen (DE)
(74) Vertreter: Grosse, Wolf-Dietrich Rüdiger

(56) Entgegenhaltungen:
- EP-A2- 1 882 636
- DE-U1- 9 206 973
- US-A1- 2004 222 173
- US-A1- 2008 314 913

## Beschreibung

Die Erfindung betrifft ein Tablar, Behälter oder dergleichen Transport- und Lagermittel, hergestellt durch Spritzgießen aus Kunststoff, mit einem Boden und sich hierzu vier senkrecht erstreckenden Wänden, wobei der Boden auf seiner Unterseite mit einer zusätzlichen Bodenplatte verschweißt ist und die doppelte Bodenanordnung mit durchgehenden, insbesondere zylindrischen Öffnungen zum Durchgriff für ein Hubmittel versehen ist.

Transportmittel, insbesondere Tablare, Transportbehälter bzw. -kisten sowie Falt- oder Klappbehälter mit gegenüber den Tablaren erhöhten Seitenwänden, dienen zur Lagerung und/oder dem Transport von Artikeln und sind im Stand der Technik in mannigfaltiger Ausführungsform bekannt.

Zum Anheben von auf dem Transportmittelboden gelagerten Artikeln weisen in der Praxis bekannte Transportmittel, insbesondere Tablare, in ihrem Boden Öffnungen auf, die einen Durchgriff einer Hubvorrichtung/-einrichtung erlauben, wie auch beispielsweise der US 2004/0 222 173 A1 zu entnehmen ist. Die Artikel können hierbei in Kartons verpackt auf der Bodenfläche innerhalb des Transportmittels oder einzeln auf einer Ladeplatte stehen, die auf dem Boden des Transportmittels liegt.

Das Anheben und die nachfolgende Entnahme der Artikel erfolgt mit einem im Logistikwesen bekannten Verfahren, indem an einer Hubeinrichtung angeordnete Hubstifte von unten durch die bodenseitigen Öffnungen des Transportmittels nach oben fahren und so den Artikel über den oberen Rand des Transportmittels hinaus anheben. In der Folge ergreift ein Rechen den Artikel und schiebt diesen mit einer horizontalen Bewegung auf einen außerhalb des Transportmittels befindlichen Lagerplatz. Nachdem sich die Hubstifte in ihre Ausgangslage abgesenkt haben, wird das solchermaßen entleerte Transportmittel zurück In seine Beladeposition befördert.

Zur Herstellung eines Transportmittels mit einem doppelten Boden ist es beispielsweise aus der DE 196 27 887 A1 und der EP 0 621 190 B1 bekannt, eine zusätzliche bzw. abschließende Bodenplatte unterseitig mit dem Transportmittelboden zu verschweißen.

Dazu wird oftmals das Im Stand der Technik bekannte Vibrationsschweißverfahren angewandt. Hierbei wird das Transportmittel mit nach oben weisendem Boden ortsfest an einem Schweißtisch befestigt, die Bodenplatte auf den Transportmittelboden aufgelegt und anschließend mittels des Schweißwerkzeugs in eine vibrierende Bewegung versetzt.

Durch die Vibrationsbewegung und einen von dem Schweißwerkzeug ausgeübten Anpressdruck entsteht zwischen dem Boden und der Bodenplatte ein Schmelzfilm bzw. ein Schweißwulst. Nach Erreichen einer voreingestellten Schweißtemperatur wird die Vibrationsbewegung abgeschaltet und der Anpressdruck noch so lange aufrecht erhalten, bis der Schmelzfilm/ die Schweißwulst abgekühlt und somit eine Schweißnaht gebildet ist.

Um die nunmehr fest miteinander verschweißten Böden mit Öffnungen für die Hubmittel zu versehen, werden diese in einem in der Praxis üblichen, weiteren Arbeitsgang in den doppelten Boden gefräst.

Durch das Fräsen der Bohrungen entstehen sowohl an dem der Bodenlnnenseite als auch an dem der Bodenunterselte bzw. der Aufstandsfläche zugewandten Außenumfang der Öffnungen scharfe Kanten. Diese scharfkantigen Grate können zum einen das Ladegut respektive die eingelagerten Artikel beschädigen und zum anderen einen reibungslosen und glattflächig aufliegenden Transport der Transportmittel auf einem Förderband oder einer Rollen-Transportbahn verhindern.

Ferner entstehen beim Fräsen der Öffnungen unvermeidlich Kunststoffspäne, die einerseits In die Förderanlage fallen und andererseits sich auf der Ladegutfläche innerhalb des Transportmittels absetzen können; das Entfernen der Kunststoffspäne wird insbesondere durch deren statische Aufladung zusätzlich erschwert.

Eine Nachbearbeitung der gefrästen Öffnungen durch einen weiteren Fräs- bzw. Schleifvorgang erfordert einen teuren, zusätzlichen Arbeitsgang, wodurch sich auch der Produktionsablauf nicht unwesentlich verlängert.

Der Erfindung liegt daher die Aufgabe zugrunde, einen gattungsgemäßen Gegenstand zu schaffen, bei dem sich die vorstehend genannten Nachteile vermeiden lassen und der in einfacher Weise die Herstellung so ermöglicht, dass ein nachträgliches Einarbeiten der bodenseitigen Öffnungen nicht mehr notwendig ist.

Diese Aufgabe wird dadurch gelöst, dass zum Verschweißen des Bodens mit der Bodenplatte im Boden des Tablars an einem unteren, inneren Tellabschnitt eines die Öffnungen begrenzenden Außenmantels ein umlaufender Kanal dergestalt ausgebildet Ist, dass mit Abstand zum unteren Ende des Außenmantels eine sich rechtwinklig nach innen erstreckende, einen horizontalen Vorsprung bildende Ebene verläuft und vom freien Ende der Ebene nach unten parallel zum Außenmantel ein Innenkragen verläuft, der unten über den Außenmantel vorragt. Somit lässt sich zwischen dem Außenmantel und unten am Innenkragen der Öffnungen ein umlaufender, nach oben hin begrenzter Hohlraum erreichen, wobei der verlängerte Innenkragen gleichzeitig weiterhin bis in die Jeweils deckungsgleiche Öffnung der anschließend unterzuschweißenden Bodenplatte hineinreicht und bündig mit deren glatter Außen- bzw. Aufstandsfläche, d.h. der Unterseite abschießt.

Der von dem umlaufenden Hohlraum bereitgestellte Kanal macht es möglich, dass hier ein beim Schweißen entstehender Schweißwulst hineinlaufen und den Kanal ausfüllen kann. Somit ist nach dem Erkalten des Kunststoffmaterials nicht nur die Bodenplatte fest mit dem Transportmittelboden verschweißt, sondern es sind auch die Öffnungen des Bodens und der Bodenplatte über ihren gesamten Umfang vollständig abgedichtet miteinander verbunden.

Der verlängerte Innenkragen der Öffnungen dient weiterhin zum Schutz der gebildeten Schweißnaht und zur Begrenzung des Schweißwulstes, so dass beim Schweißvorgang kein Kunststoffmaterial in die Öffnungen eindringen kann,

Die solchermaßen bereits am Ort des Geschehens, nämlich der spritzgusstechnischen Herstellung, in einem Arbeitsgang vorbereiteten Öffnungen, die beim Auflegen der Bodenplatte auf den Transportmittelboden zum Verschweißen in eine Deckungslage gebracht werden, weisen im Bereich ihres oberen und unteren Außenmantels, d. h. der umlaufenden Begrenzungsfläche der Öffnungen, einen gratfreien und somit glatten Übergang zum Transportmittelboden bzw. zur Bodenplatte auf. Das im fertigen Transportmittel befindliche Inhaltsgut wird somit weder beschädigt, noch bleibt es an unebenen Öffnungsrändern bzw. -kanten hängen. Durch die im Bereich ihrer Öffnungen von Störkanten freie Bodenplatte kann das Transportmittel schonend und weitestgehend erschütterungsfrei über Fördereinrichtungen gleiten.

Nach einer bevorzugten Ausgestaltung der Erfindung ist vorgesehen, dass der Innenkragen wenigstens einer Öffnung an seiner freien Unterseite mit sich gegenüberliegend angeordneten Ausnehmungen versehen Ist. Diese liegen nach dem Auflegen der unterzuschweißenden Bodenplatte Innerhalb der komplementären Öffnung der Bodenplatte und nehmen ein in der Öffnung der Bodenplatte ausgebildetes Zentriermittel auf, das aus zwei sich kreuzenden Streben besteht, wobei sich zumindest die in die Ausnehmungen eingreifende Strebe über den gesamten Durchmesser bzw. Querschnitt der Öffnung erstreckt. Die endseitig der Öffnung in die Ausnehmungen eingerastete und somit verhältnismäßig steife Strebe begünstigt eine exakt waagerechte Positionierung der Bodenplatte auf dem Boden des Transportmittels.

Das Zentriermittel zum Verschweißen von Bodenplatte und Boden kann in zumindest einer Öffnung der Bodenplatte vorgesehen werden, vorzugsweise direkt mit angespritzt, alternativ als Einsatz, und beim Auflegen der Bodenplatte auf den Transportmittelboden fluchtend in eine deckungsgleiche Öffnung des Transportmittelbodens eingreifen und diesen für den sich anschließenden Schweißvorgang lagesicher positionieren. Die Zentriermittel brauchen sich somit nicht In allen der in der Regel als zweireihiges Lochbild vorhandenen Öffnungen zu befinden. Es reicht aus, wenn insbesondere eine der im mittleren Bodenfeld der Bodenplatte ausgeformten Öffnungen das Zentriermittel aufweist. Darüber lässt sich die Bodenplatte genau positioniert und mit Formschluss auf dem Boden des Transportmittels festlegen. Das lässt sich weiter begünstigen, wenn die Zentrierung über zumindest zwei Öffnungen erfolgt.

Die die durchgehende Strebe in ihrer Mitte vorzugsweise im Winkel von 90° kreuzende, kürzere Strebe endet mit einem geringen Abstand vor dem Innenkragen der bodenseitigen Öffnung. Das somit gebildete Zentrierkreuz ermöglicht nicht nur, dass die Bodenplatte zentriert und formschlüssig auf dem Boden des Transport- und Lagermittels aufliegt, sondern weiterhin eine Null-Punkt-Zentrierung für einen Dom des Schweißwerkzeuges, der in die Öffnung eingreift und dabei das Zentrierkreuz aufnimmt. Die freien, nicht angebundenen bzw. festgelegten Enden der kurzen Strebe erlauben hierbei eine gewisse Bewegungsfreiheit in der horizontalen Schwingrichtung des Vibrationsschweißwerkzeugs.

Die mit dem Transportmittelboden verschweißte Bodenplatte besitzt erfindungsgemäß eine ebene und glatte Aufstandsfläche, was einerseits den Vorteil bietet, dass eine glatte, ununterbrochene Bodenplatte höheren Belastungen standhält und andererseits auf Förderbahnen reibungsloser und geräuschärmer läuft bzw. gleitet, als eine Bodenplatte mit verrippter Aufstands- bzw. Lauffläche, die zudem das Ablaufen von Waschwasser bei der Reinigung erschweren würde.

Eine vorteilhafte Ausgestaltung der Erfindung sieht vor, dass der Boden des Transportmittels auf seiner der Bodenplatte zugewandten Unterseite in den von Öffnungen freien Bereichen mit Quer- und Längsrippen ausgebildet ist, wodurch eine höhere Stabilität des mit dem Inhaltsgut belasteten Transportmittels erreicht wird.

Zweckmäßig sind sowohl einzelne Quer- als auch Längsrippen an ihren freien, der Bodenplatte zugewandten Stegen mit Durchlüftungsschlitzen versehen, die eine Luftzirkulation in dem geschlossenen Unterboden, d.h. zwischen dem Transportmittelboden und der damit dicht verschweißten Bodenplatte ermöglichen. Vorteilhaft sind zum Ablauf von Schmutz- und Regenwasser vom Transportmittelboden ausgehend Wasserablauflöcher ausgebildet, die sich röhrchenartig zwischen dem Transportmittelboden und der Bodenplatte erstrecken.

Weitere Merkmale und Einzelheiten der Erfindung ergeben sich aus den Ansprüchen und der nachfolgenden Beschreibung eines in den Zeichnungen anhand eines Tablars als Transport- und Lagermittel dargestellten Ausführungsbeispiels der Erfindung. Es zeigen:
- Figur 1: in einer perspektivischen Gesamtansicht ein mit Aushebeöffnungen ausgebildetes Tablar, von oben bzw. der Beladeseite her gesehen,
- Figur 2: eine perspektivische Gesamtansicht der Unterseite des Tablars gemäß Figur 1;
- Figur 3: eine perspektivische Teilansicht des Tablars im Bereich einer geschnitten dargestellten Aushebeöffnung, von der Unterseite her gesehen;
- Figur 4: als Einzelheit in einem Längsschnitt eine Aushebeöffnung des Tablars;
- Figur 5: ein Tablar mit zu einem geschlossenen, Aushebeöffnungen aufweisenden Unterboden untergeschweißter Bodenplatte, in einer Gesamtansicht von unten her gesehen;
- Figur 6: als Einzelheit eine unterzuschweißende Bodenplatte mit in zwei Aushebeöffnungen in Form von sich kreuzenden Streben ausgebildeten Zentriermitteln;
- Figur 7: in einer perspektivischen Gesamtansicht ein Tablar mit der untergeschweißten Bodenplatte gemäß Figur 6;
- Figur 8: als perspektivische Teilansicht des Tablars gemäß Figur 7 eine Aushebeöffnung mit Positionierung der Bodenplatte auf dem Boden des Transport- und Lagermittels durch ein Zentriermittel von der Unterseite her gesehen; und
- Figur 9: als Einzelheit eine Schnittdarstellung der Aushebeöffnung der Figur 8.

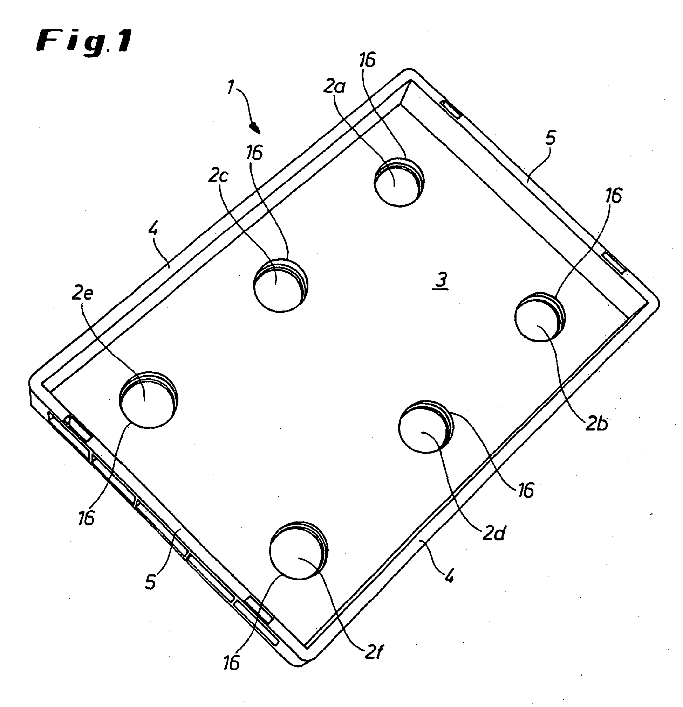

Ein auf Förderanlagen zu transportierendes und beispielsweise in Regalen einzulagerndes, in Figur 1 dargestelltes Tablar 1 zur Aufnahme von Artikeln weist einen mit Öffnungen 2a bis 2f ausgebildeten Boden 3 sowie sich dazu senkrecht nach oben erstreckende Längswände 4 und Stirnwände 5 auf. Die Öffnungen 2a bis 2f ermöglichen einen Durchgriff einer Hubeinrichtung zum Ausheben von auf dem Boden 3 gelagerten, hier nicht dargestellten Artikeln.

Das Tablar 1 wird einstückig durch Spritzgießen aus Kunststoff hergestellt, wobei auch die Öffnungen 2a bis 2f schon direkt im Spritzgusswerkzeug ausgebildet werden, so dass sich für diese ein glatter, grat- bzw. kantenfreier oberer und unterer Öffnungsbereich erreichen lässt.

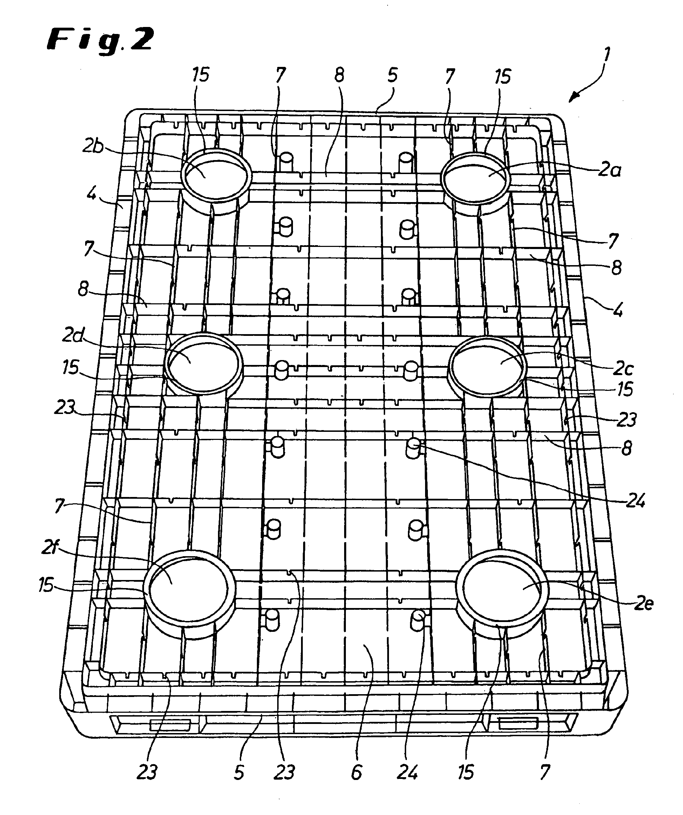

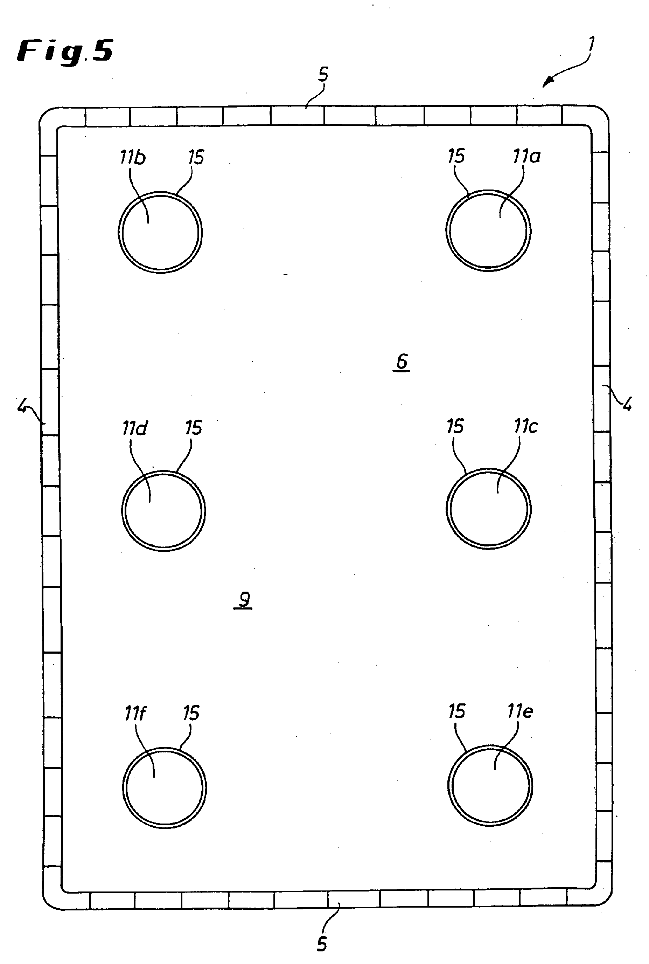

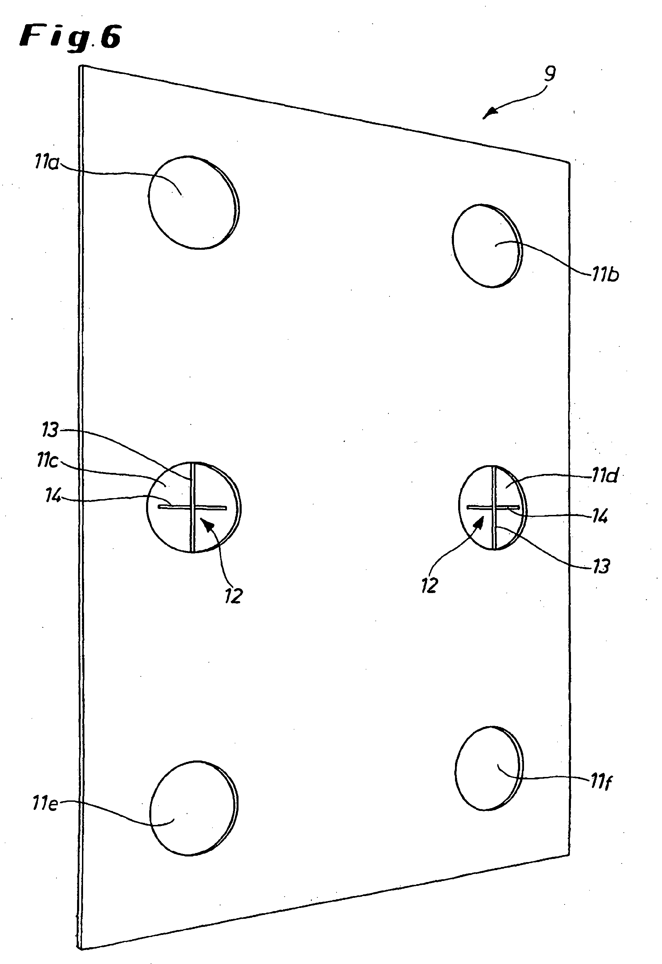

Wie in Figur 2 dargestellt, ist die Unterseite 6 des Bodens 3 in den zwischen den Öffnungen 2a bis 2f verbleibenden Flächenbereichen mit den Boden 3 verstärkenden Längs- und Querrippen 7, 8 ausgebildet. Der verrippte Boden 3 wird mit einer Bodenplatte 9 zu einem geschlossenen Unterboden des Tablars 1 verschweißt. Die Bodenplatte 9 weist zur Verbesserung der Lauffähigkeit auf Förderanlagen außenseitig eine glatte Auflagefläche 10 auf. Auch die Bodenplatte 9 wird bei ihrer Herstellung durch Spritzgießen aus Kunststoff im Spritzgusswerkzeug schon direkt mit Öffnungen 11a bis 11f versehen (vergleiche hierzu Figur 5 und 6).

Die Öffnungen 11a bis 11f der Bodenplatte 9 sind im gleichen Rastermaß ausgebildet wie die Öffnungen 2a bis 2f im Boden 3 des Tablars 1, so dass die Öffnungen 2a bis 2f und 11a bis 11f nach dem Auflegen der Bodenplatte 9 auf dem Boden 3 in eine fluchtend übereinanderliegende Lage gebracht werden können (vergleiche hierzu Figur 5).

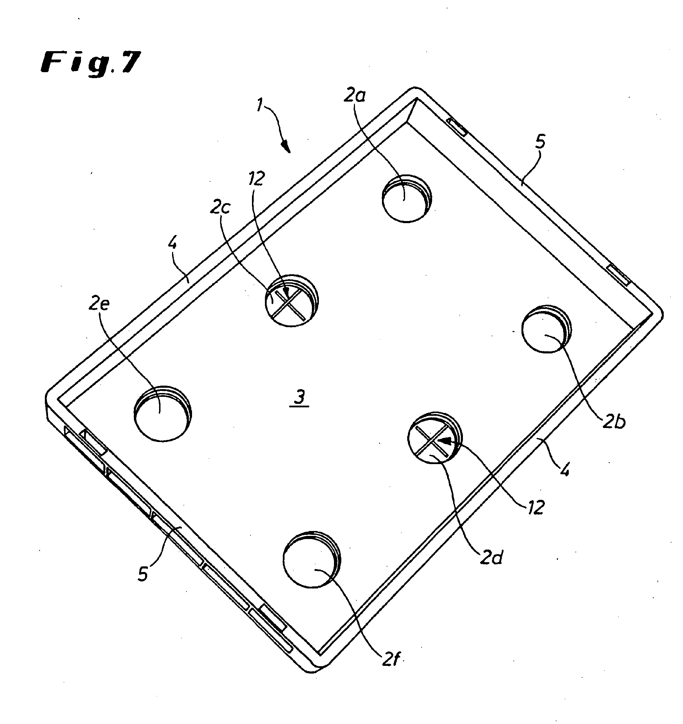

Wie den Figuren 6 bis 9 zu entnehmen ist, sind zur exakten Zentrierung der Bodenplatte 9 auf der Unterseite 6 des Bodens 3 als Vorbereitung zum Verschweißen des Bodens 3 mit der Bodenplatte 9 im Ausführungsbeispiel die beiden mittleren Öffnungen 11 c und 11 d der Bodenplatte 9 mit einem Zentrierkreuz 12 als Zentriermittel ausgebildet. Das Zentrierkreuz 12 besteht aus zwei sich mittig kreuzenden Streben 13, 14, von denen sich die Strebe 13 über den gesamten Durchmesser bzw. Querschnitt der Aushebeöffnung 11c und 11d erstreckt und bei sogleich mit angespitztem Zentrierkreuz 12 endseitig fest mit der Bodenplatte 9 verbunden ist. Die kürzere Strebe14 hält mit ihren Enden einen geringen Abstand zum Außenumfang der Öffnung 11c, 11d ein.

Die zylindrischen Öffnungen 2a bis 2f des Tablarbodens 3 weisen an ihrem der Bodenplatte 9 zugewandten, unteren Ende 15 einen geringeren Durchmesser als an ihrem dem Tablarinneren zugewandten, oberen Ende 16 auf.

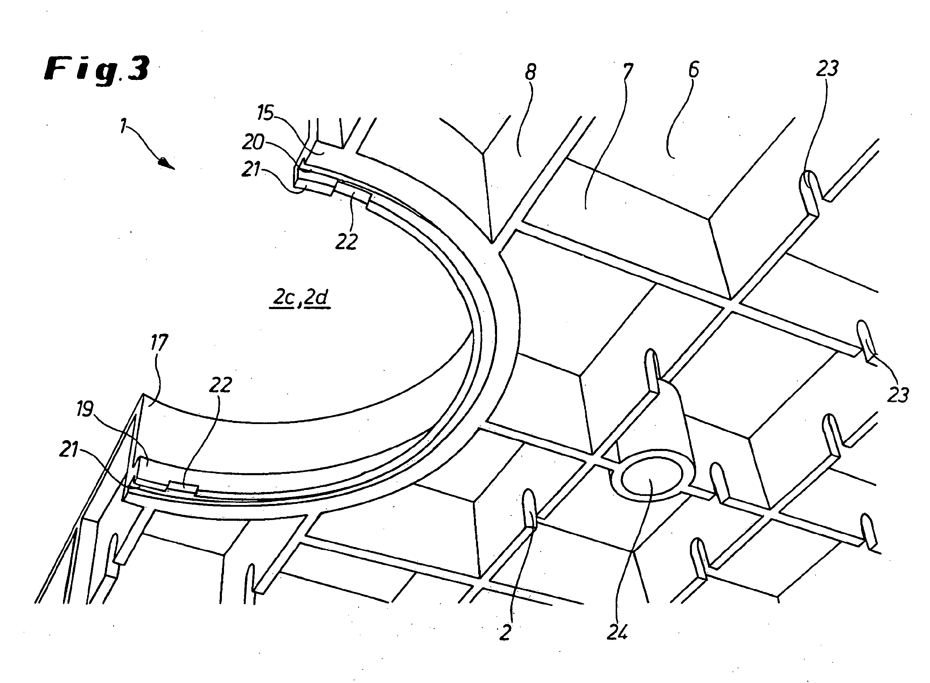

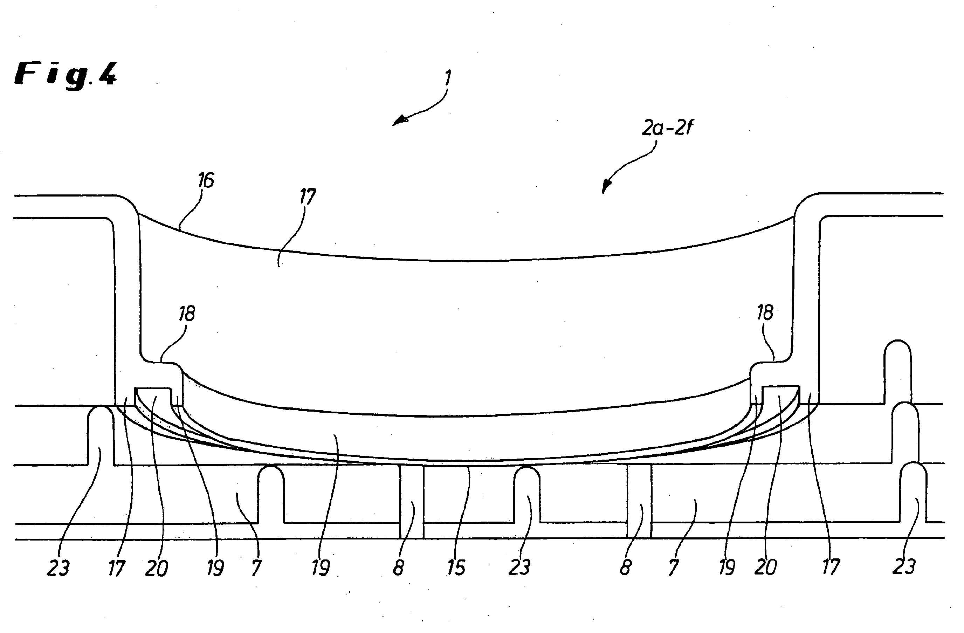

Die Reduzierung des Durchmessers erfolgt dadurch, dass mit Abstand zum unteren Ende 15 des Außenmantels 17 der Öffnungen 2a bis 2f eine sich rechtwinklig nach innen erstreckende, einen horizontalen Vorsprung bildende Ebene 18 verläuft und vom freien Ende der Ebene 18 nach unten parallel zum Außenmantel 17 ein Innenkragen19 verläuft, der über das untere Ende 15 des Außenmantels 17 nach unten vorkragt. Somit entsteht zwischen dem Außenmantel 17 und dem Innenkragen 19 ein nach oben hin geschlossener, umlaufender Kanal 20, der nach unten hin durch die Bodenplatte 9 abgedeckt und beim Verschweißen durch eine Schweißwulst ausgefüllt wird (vergleiche hierzu die Figuren 3 und 4).

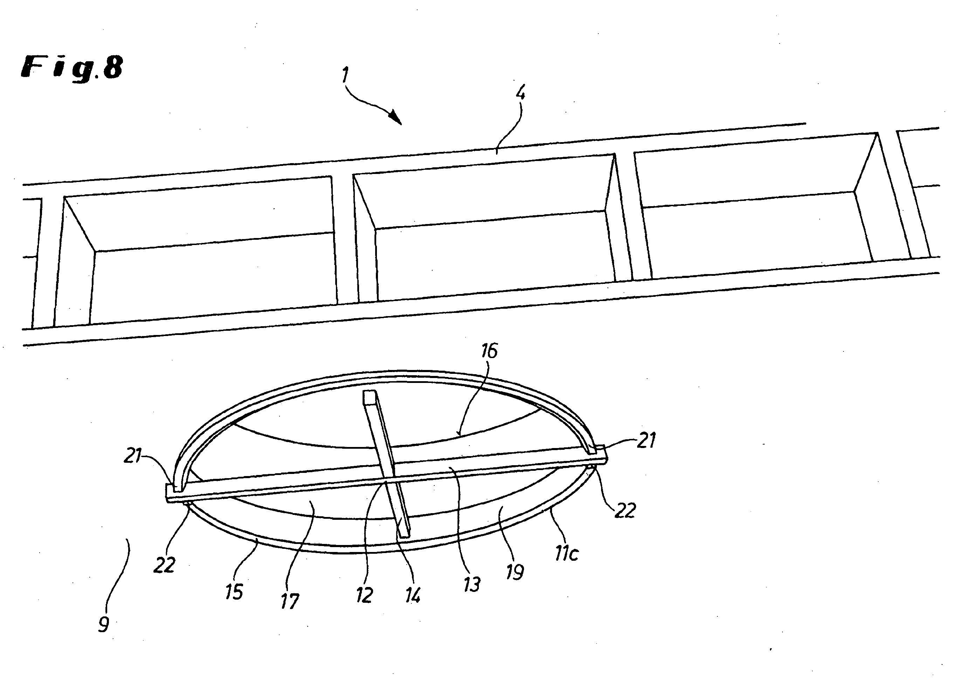

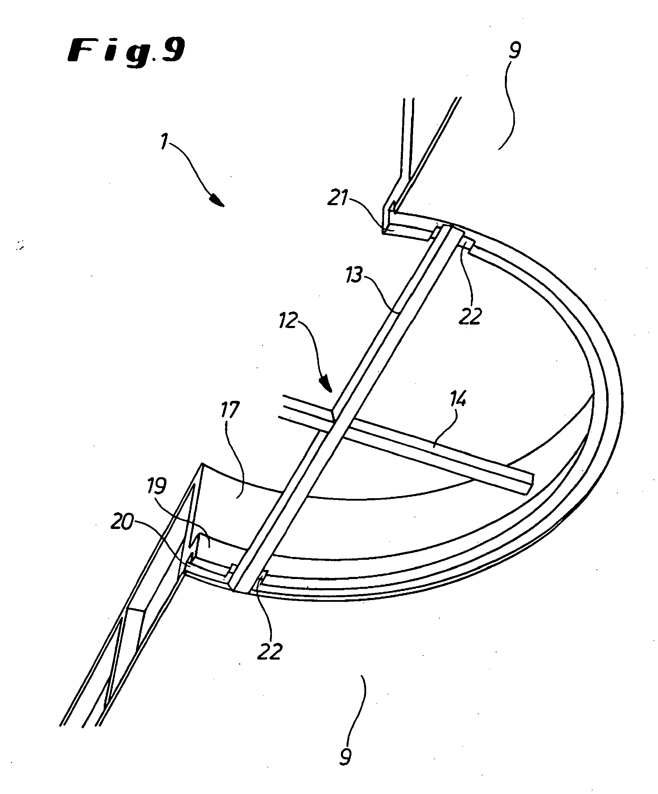

Der über die verrippte Unterseite 6 des Bodens 3 vorstehende Innenkragen 19 reicht bis in die jeweils deckungsgleiche Öffnung 11a bis 11f der Bodenplatte 9 und liegt dabei mit seinem Außenumfang am Innenumfang der Öffnungen 11a bis 11f an (vergleiche hierzu Figur 8 und 9).

Der Innenkragen 19 der beiden mittleren Öffnungen 2c, 2d des Bodens 3 ist an seiner freien Unterseite 21 mit sich gegenüberliegend angeordneten Ausnehmungen 22 zur Aufnahme der Enden der längeren Strebe 13 des Zentrierkreuzes 12 versehen.

Die Bodenplatte 9 lässt sich durch Einrasten der Endabschnitte der längeren Strebe 13 in die Ausnehmungen 22 somit in waagerechter Ebene zentriert und formschlüssig auf die Unterseite 6 des Tablarbodens 3 bzw. dessen Rippen 7, 8 auflegen. Bei dem sich dann anschließenden Schweißvorgang greift ein entsprechend angepasster Dom des Schweißwerkzeuges durch die Öffnungen 11c, 11d und nimmt dabei die beiden außerdem eine Null-Punkt-Zentrierung zwischen dem Tablar 1 und der Bodenplatte 9 ermöglichenden Zentrierkreuze 12 auf.

Durch die sich beim Schweißen entwickelnde Wärme bildet sich zum einen ein Schweißwulst, der in den umlaufenden Kanal 20 fließt, und zum anderen ein Schmelzfilm zwischen der Bodenplatte 9 und der Unterseite 6 des Bodens 3. Nach dem Erkalten des geschmolzenen Kunststoffmaterials ist die Bodenplatte 9 flächig und fest mit dem Tablar 1 verschweißt. Der bis in die Öffnungen 11a bis 11f hineinragende und an diesen anliegende Innenkragen 19 verhindert dabei eine Ausdehnung des Schweißwulstes ins Innere der Öffnungen 2a bis 2f und 11a bis 11f, die somit frei zugänglich bleiben, durch den erstarrten Schweißwulst allerdings voll umfänglich bzw. umlaufend abgedichtet miteinander verbunden sind.

Nach erfolgtem Schweißvorgang wird das Zentrierkreuz 12 aus den Öffnungen 11 c, 11 d entfernt, indem die durchgehenden, längeren Streben 13 mit einem scharfen Gegenstand abgetrennt werden.

Um eine Luftzirkulation zwischen dem Boden 3 und der damit dicht verschweißten Bodenplatte 9 zu ermöglichen, sind einzelne Längs- und Querrippen 7, 8 mit Durchlüftungsschlitzen 23 ausgebildet (vgl. Figur 3).

Ferner ist der Boden 3 des Tablars 1 mit Wasserablauföffnungen 24 versehen (vgl. die Figuren 2 und 3), die sich röhrchenförmig zwischen dem Boden 3 und der Bodenplatte 9 erstrecken.

### Bezugszeichenliste:

- 1: Tablar
- 2a - 2f: Öffnungen (Tablar)
- 3: Boden
- 4: Längswände
- 5: Stirnwände
- 6: Unterseite Tablarboden
- 7: Längsrippen
- 8: Querrippen
- 9: Bodenplatte
- 10: Auflagefläche
- 11a - 11f: Öffnungen (Bodenplatte)
- 12: Zentrierkreuz / Zentriermittel
- 13: Strebe (lange)
- 14: Strebe (kurze)
- 15: unteres Öffnungsende (Tablar)
- 16: oberes Öffnungsende (Tablar)
- 17: Außenmantel
- 18: horizontale Ebene
- 19: Innenkragen
- 20: umlaufender Kanal
- 21: Unterseite
- 22: Ausnehmung
- 23: Durchlüftungsschlitze
- 24: Wasserablauföffnungen

## Patentansprüche

1. Tablar, Behälter oder dergleichen Transport- und Lagermittel (1), hergestellt durch Spritzgießen aus Kunststoff, mit einem Boden (3) mit insbesondere zylindrischen Öffnungen (2a-2f) zum Durchgriff für ein Hubmittel und sich hierzu vier senkrecht erstreckenden Wänden (4,5), **dadurch gekennzeichnet, dass** der Boden (3) auf seiner Unterseite mit einer zusätzlichen Bodenplatte (9) verschweißt ist und die doppelte Bodenanordnung mit durchgehenden, Öffnungen (2a-2f; 11a-11f) versehen ist, wobei
im Boden (3) des Tablars (1) an einem unteren, inneren Teilabschnitt eines die Öffnungen (2a-2f) begrenzenden Außenmantels (17) ein umlaufender Kanal (20) dergestalt ausgebildet Ist, dass mit Abstand zum unteren Ende (15) des Außenmantels (17) eine sich rechtwinklig nach innen erstreckende, einen horizontalen Vorsprung bildende Ebene (18) verläuft und vom freien Ende der Ebene (18) nach unten parallel zum Außenmantel (17) ein Innenkragen (19) verläuft, der unten über den Außenmantel (17) vorragt.

2. Tablar nach Anspruch 1,
**dadurch gekennzeichnet,**
**dass** der Innenkragen (19) wenigstens einer Öffnung (2c, 2d) an seiner freien Unterseite (21) mit sich gegenüberliegend angeordneten Ausnehmungen (22) versehen ist und die zu der Öffnung (2c, 2d) des Bodens (3) fluchtende Öffnung (11c, 11d) der Bodenplatte (9) ein Zentrlerelement (12) aufweist, das aus zwei sich kreuzenden Streben (13, 14) besteht, wobei sich zumindest eine Strebe (13) über den gesamten Querschnitt der Öffnungen (11c, 11d) erstreckt.

3. Tablar nach Anspruch 2,
**dadurch gekennzeichnet,**
**dass** die Bodenplatte (9) mit einer glatten und ebenen Auflagefläche (10) ausgebildet ist.

4. Tablar nach einem der Ansprüche 1 bis 3,
**dadurch gekennzeichnet,**
**dass** sein Boden (3) auf der Unterseite (6) in den von den Öffnungen (2a - 2f) freien Bereichen mit Längs- und Querrippen (7, 8) ausgebildet ist.

5. Tablar nach Anspruch 4,
**dadurch gekennzeichnet,**
**dass** einzelne Längs- und Querrippen (7, 8) mit Durchlüftungsschlitzen (23) versehen sind.

6. Tablar nach einem der Ansprüche 1 bis 5,
**dadurch gekennzeichnet,**
**dass** in seinem Boden (3) Wasserablauföffnungen (24) ausgebildet sind.

## Claims

1. A tray, container or similar transport and storage means (1) made of injection-moulded plastic, with a bottom (3) featuring particularly cylindrical openings (2a-2f) for passing through a lifting means and with four walls (4, 5) extending perpendicular to said bottom, **characterized in that** the bottom (3) is on its underside welded to an additional bottom plate (9) and the double bottom arrangement is provided with continuous openings (2a-2f; 11a-11f), wherein a circumferential channel (20) is formed in the bottom (3) of the tray (1) on a lower, inner section of an outer surface (17) defining the openings (2a-2f) in such a way that a plane (18), which runs perpendicularly inward and forms a horizontal projection, extends at a distance from the lower end (15) of the outer surface (17) and an inner collar (19), which on the bottom protrudes over the outer surface (17), extends downward from the free end of the plane (18) parallel to the outer surface (17).

2. The tray according to claim 1,
**characterized in**
**that** the inner collar (19) of at least one opening (2c, 2d) is on its free underside (21) provided with oppositely arranged recesses (22), and in that the opening (11c, 11d) in the bottom plate (9), which is aligned with the opening (2c, 2d) in the bottom (3), features a centering element (12) consisting of two intersecting braces (13, 14), wherein at least one brace (13) extends over the entire cross section of the openings (11c, 11d).

3. The tray according to claim 2,
**characterized in**
**that** the bottom plate (9) is realized with a smooth and plane supporting surface (10).

4. The tray according to one of claims 1-3,
**characterized in**
**that** its bottom (3) is on the underside (6) realized with longitudinal and lateral ribs (7, 8) in the areas that are free of openings (2a-2f).

5. The tray according to claim 4,
**characterized in**
**that** individual longitudinal and lateral ribs (7, 8) are provided with ventilation slots (23).

6. The tray according to one of claims 1-5,
**characterized in**
**that** water drainage openings (24) are formed in its bottom (3).

## Revendications

1. Rayon, conteneur ou moyen de transport et de stockage similaire (1), fabriqué par moulage par injection de plastique, comportant un fond (3) pourvu d'ouvertures (2a-2f) en particulier cylindriques pour y passer un moyen de levage et de quatre parois (4, 5) s'étendant perpendiculairement à celui-ci,
**caractérisé en ce que**
le fond (3) est soudé par son dessous à une plaque de sol supplémentaire (9) et que le double système de fond est pourvu d'ouvertures continues (2a-2f : 11a-11f),
que, dans le fond (3) du rayon (1), sur une sous-section inférieure interne d'une enveloppe extérieure (17) limitant les ouvertures (2a-2f), un canal périphérique (20) est réalisé de manière à ce qu'un plan (18) s'étendant orthogonalement vers l'intérieur et formant une saillie horizontale s'étende à distance vers l'extrémité inférieure (15) de l'enveloppe extérieure (17) et qu'une collerette intérieure (19) qui dépasse en bas de l'enveloppe extérieure (17) s'étende depuis l'extrémité libre du plan (18) vers le bas parallèlement à l'enveloppe extérieure (17).

2. Rayon selon la revendication 1,
**caractérisé en ce que**
la collerette intérieure (19) d'au moins une ouverture (2c, 2d) est pourvue sur sa face inférieure libre (21) d'échancrures (22) disposées face à face et que l'ouverture (11c, 11d) alignée par rapport à l'ouverture (2c, 2d) du fond (3) de la plaque de sol (9) présente un élément de centrage (12) qui est composé de deux traverses se croisant (13, 14), au moins une traverse (13) s'étendant sur toute la surface transversale des ouvertures (11c, 11d).

3. Rayon selon la revendication 2,
**caractérisé en ce que**
la plaque de sol (9) est réalisée avec une surface d'appui lisse et plane (10).

4. Rayon selon une des revendications 1 à 3,
**caractérisé en ce que**
son fond (3) est réalisé avec des nervures longitudinales et transversales (7, 8) sur la face inférieure (6) dans les parties exemptes d'ouvertures (2a-2f).

5. Rayon selon la revendication 4,
**caractérisé en ce que**
les nervures longitudinales et transversales (7, 8) sont pourvues de fentes d'aération (23).

6. Rayon selon une des revendications 1 à 5,
**caractérisé en ce que**
des orifices d'évacuation d'eau (24) sont pratiqués dans son fond (3).
